# EUROPÄISCHE PATENTANMELDUNG

(11) **EP 4 228 204 A1**
(43) Veröffentlichungstag der Anmeldung: **16.08.2023**
(21) Anmeldenummer: 22156834.8
(22) Anmeldetag: 15.02.2022
(51) Int. Cl.: H04L 9/40

(54) **ZERO TRUST FÜR EIN OPERATIONAL TECHNOLOGY NETZWERK TRANSPORT PROTOKOLL**

(71) Anmelder: Siemens Aktiengesellschaft, 80333 München (DE)
(72) Erfinder: Aschauer, Hans, 81829 München (DE); Frank, Reinhard, 81369 München (DE); Friedrich, Daniela, 81827 München (DE); Huth, Hans-Peter, 80638 München (DE); Limmer, Tobias, 80797 München (DE)
(74) Vertreter: Siemens Patent Attorneys

(57) **Zusammenfassung**

Die Erfindung gibt Verfahren zur Kommunikation in einem OT System, aufweisend eine erste Recheneinheit (1), eine zweite Recheneinheit (2) und eine IAM Recheneinheit (3), mit den Schritten:
i) die erste Recheneinheit (1) beantrag für einen vorgegeben Dienst der zweiten Recheneinheit (2) bei der IAM Recheneinheit (3) ein Token (4), wobei das Token (4) eine Autorisierungs-Information für den Dienst aufweist,
ii) nach erfolgreicher Authentisierung und Überprüfung einer Autorisierung der ersten Recheneinheit (1) für den Dienst erhält die erste Recheneinheit (1) das Token (4),
iii) die erste Recheneinheit (1) überträgt das Token (4) an die zweite Recheneinheit (4),
iv) das Token (4) wird von der zweiten Recheneinheit (2) auf Autorisierung überprüft,
v) bei erfolgreicher Autorisierung wird ein logischer Kommunikationskanal (5) zwischen der ersten und der zweiten Recheneinheit (1, 2) aufgebaut und der Dienst zur Verfügung gestellt, wobei
v.a) der Kommunikationskanal (5) kryptografisch geschützt ausgebildet ist,
v.b) der kryptografische Schutz des Kommunikationskanals (5) kryptografisch an den Inhalt des Tokens (4) gebunden ist, und
v.c) der Lebenszyklus des Kommunikationskanals (5) auch zeitlich länger sein darf als der Kommunikationsvorgang zwischen der ersten und der zweiten Recheneinheit (1, 2), und
vi) die Kommunikation zwischen der ersten und der zweiten Recheneinheit (1, 2) wird ausschließlich über den logischen Kommunikationskanal (5) durchgeführt.

Die Erfindung gibt auch ein zugehöriges OT System an.

## Beschreibung

### GEBIET DER ERFINDUNG

Die Erfindung betrifft ein Verfahren zur Kommunikation in einem OT System und ein OT System mit einer IAM Recheneinheit.

### HINTERGRUND DER ERFINDUNG

Beim Zugriff auf Applikations-Dienste über ein Kommunikationsnetzwerk und der von diesen Diensten bereitgestellten Ressourcen muss meist an einer Stelle entschieden werden, welcher Benutzer oder welches Gerät auf welchen Service unter welchen Umständen zugreifen darf. Dazu muss sich normalerweise der Benutzer oder das Gerät authentisieren ("wer bin ich"), und basierend darauf wird entschieden, welche Berechtigungen erteilt wird ("was darf ich").

Herkömmlich wurde jeder Service so konfiguriert, dass basierend auf einer Anmelde-Information (wie Benutzername und Passwort) die entsprechenden Berechtigungen durch die Anwendung erteilt werden, die den Applikations-Dienst implementiert.

Um einerseits die User Experience zu verbessern ("single sign on"), und andererseits die Administration zu vereinfachen, geht man in aktuellen Architekturen dazu über, die Authentisierung in einen eigenen Service auszulagern (Identity and Access Management, IAM). In diesem Service ist zentral konfiguriert, welche Services welcher Benutzer oder welches Gerät unter welchen Umständen benutzen darf (= Autorisierungsinformation). Die Autorisierungsinformation wird an den Service weitergeleitet, der die erlaubten Zugriffe ermöglicht, und andere blockiert.

In bekannten IT-Systemen funktioniert dieser Ansatz dadurch, dass die Autorisierungsinformation in der Applikationsschicht transportiert wird. Deshalb muss dieser Ansatz für unterschiedliche Kommunikationsprotokolle separat definiert und implementiert werden, was heute nur für Protokolle aus dem Web-Umfeld erfolgt ist (http).

Die wichtigste Komponente, die die beschriebene Architektur für Web-Applikationen ermöglicht, ist der SAML-Stack (https://en.wikipedia.org/wiki/SAML_2.0), der in definierten Profilen festlegt, wie ein Client (Web-Browser) mit einem Service (Web-Server) so kommuniziert, dass ein IAM-System (Identity Access Management, https://en.wikipedia.org/wiki/Identity_management) die Authentisierung des Benutzers vornehmen kann, und die Autorisierungs-Information zum Service transportiert wird.

Daneben ist auch das OAuth-Protokoll bekannt (https://en.wikipedia.org/wiki/OAuth), das einen Autorisierungs-Mechanismus für Web-APIs zur Verfügung stellt.

Weiter sind die Transport-Layer-Security Protokolle TLS und DTLS bekannt (https://en.wikipedia.org/wiki/Transport_Layer_Security, https://en.wikipedia.org/wiki/Datagram_Transport_Layer_Securi ty), die eine authentisierte und vertrauliche Kommunikation auf dem Transport Layer erlauben, ebenso wie das neue QUIC Protokoll (https://en.wikipedia.org/wiki/QUIC) oder das ältere SCTP (https://tools.ietf.org/html/rfc4960).

Das standardisierte TLS-Protokoll in Version 1.3 (https://tools.ietf.org/html/rfc8446) und das in der Standardisierung befindliche QUIC Protokoll (https://datatracker.ietf.org/wg/quic/about/) erlauben dabei eine sogenannte Zero-Roundtrip-Security (0-RTT), wobei (a) die Verfügbarkeit von 0-RTT für den Client nicht deterministisch ist und (b) beim Einsatz von 0-RTT Replay-Angriffe nicht verhindert werden.

Weiter ist es für OT-Umgebungen bekannt, dass Kommunikationsbeziehungen durch einen sog. Engineering Prozess festgelegt werden. Als OT (Operational Technology) bezeichnet man Hardware und Software, die zur Steuerung und Regelung, Überwachung und Kontrolle von Maschinen, Anlagen und Prozessen benötigt werden. In der Vergangenheit wurden operative Technologien lediglich als Industriesteueranlagentechnik gesehen, welche in geschlossenen Systemen mit proprietären Protokollen kommunizieren.

Weiter sind als Methode der sicheren Verbindung von Netzwerken Virtual Private Networks (VPNs) bekannt (https://en.wikipedia.org/wiki/Virtual_private_network). Dabei werden die Benutzerdaten durch einen gesicherten - meist verschlüsselten - sogenannten Tunnel geleitet.

Weiter ist als Schutzmaßnahme in OT-Netzen eine Netzwerk-Segmentierung (z.B. mit Hilfe von VLANs, https://en.wikipedia.org/wiki/Virtual_LAN) bekannt.

Weiter ist abstrakt die Aufteilung der Zugriffsteuerung in einen "Policy Decision Point" und einen "Policy Enforcement Point" auch für OT-Systeme bekannt. Siehe z.B. im Kontext der Plattform Industrie 4.0 (https://www.plattform-i40.de/PI40/Redaktion/EN/Downloads/Publikation/Access%20contr ol%20for%20Industrie%204.0%20components.html). Das in der Patentanmeldung offenbarte Verfahren eignet sich dazu, dieses abstrakte Konzept zu implementieren.

### ZUSAMMENFASSUNG DER ERFINDUNG

Es ist Aufgabe der Erfindung, eine Lösung anzugeben, die in industriellen OT Netzen eine robuste und sichere Kommunikation ermöglicht.

Die vorliegende Erfindung betrifft ein OT System, das eine Architektur für beliebige Kommunikationsprotokolle umsetzt, wobei die Rahmenbedingungen ausgenutzt werden, die üblicherweise in OT-Netzen existieren, um den Kommunikationsoverhead zu reduzieren.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein erster Aspekt der Erfindung ist ein sog. Channel (= Kommunikationskanal). Der Channel beschreibt eine Kommunikationsbeziehung zwischen zwei Kommunikationspartnern, häufig einem Client (= erste Recheneinheit, wie z.B. ein Gerät) und einem Anwendungs-Dienst oder Service (= zweite Recheneinheit) oder einem anderen Client (= zweite Recheneinheit), die von einer Autorisierungs-Policy (= IAM Recheneinheit) geregelt wird. Aus technischer Sicht besteht der Channel aus Informationen, die zwischen den Kommunikationspartnern, also z.B. dem Client und dem Dienst, geteilt wird (= shared channel information) und durch den unten beschriebenen Channel-Aufbau entsteht. Diese geteilte Information ist durch geeignete Mechanismen (vorteilhafterweise durch kryptographische Methoden) an eine Autorisierungs-Information gebunden. Bei der Autorisierungs-Information (= Token) kann es sich z.B. um ein SAML-Dokument, um ein Attribut-Zertifikat nach X.509, um eine JSON Web Token oder eine CBOR Web Token handeln.

Token haben vorteilhafterweise eine Gültigkeits-Dauer oder eine Ablauf-Zeit. In diesem Fall ist eine vorteilhafte Ausgestaltung der Binding zwischen Channel und Token derart, dass nicht nach dem Ablauf der Gültigkeitsdauer eines Tokens ein neuer Channel aufgebaut werden muss, sondern dass ein bestehender Channel weiterbenutzt werden kann, sofern der Client der Service-Applikation ein neues Token präsentiert, das sich vom vorherigen Token nur in genau definierten Attributen unterscheidet (z.B. nur in der Gültigkeitsdauer).

Alternativ zu einem neuen Token mit veränderter Gültigkeitsdauer kann die IAM Recheneinheit auch ein Token ausstellen, das ein bestehendes Token referenziert (indem es z.B. dessen Hash-Wert als Attribut enthält), und dessen Gültigkeitsdauer verlängert.

In einem weiteren Aspekt kann die IAM Recheneinheit ein (insb. langlebiges) Token revozieren, also für ungültig erklären. In dieser Ausgestaltung muss sichergestellt werden, dass die Information über revozierte Tokens zeitnah die betroffenen Service-Applikationen erreicht, entweder durch ein Push-Verfahren (die IAM Recheneinheit verteilt Sperrlisten an die betroffenen Services), oder durch ein Pull-Verfahren, bei dem die Service-Anwendung regelmäßig oder getriggert durch bestimmte Ereignisse (z.B. Verbindungsaufbau) die Gültigkeit eines Tokens bei der IAM Recheneinheit oder einem Revokationslisten-Dienst erfragt.

Die Offenbarung hat folgende Vorteile:
1) Bindung von Autorisierungs-Information an Sicherheitsmechanismen auf dem Transport-Layer:
   a) Beliebige Protokolle, die den Transport-Layer benutzen, können unter Berücksichtigung einer Autorisierung durch eine IAM Recheneinheit abgesichert werden. Dies ist anders als bei den existierenden Lösungen (wie z.B. SAML 2.0), die derzeit nur für das http-Protokoll definiert sind.
   b) Eine Benutzung des Dienstes wird für nicht autorisierte Clients frühzeitig unmöglich gemacht. Auch das ist anders als bei Übertragung der Autorisierungs-Information im Application-Layer, weil dort zuerst die Transport-Sicherung (z.B. TLS bei https) unabhängig ist von der Autorisierungs-Information, und erst der Webserver die Autorisierungs-Information überprüfen kann. Dies bedeutet eine deutlich erhöhte AngriffsFläche, insbesondere auch bei DoS-Angriffen.
2) Durch das explizite Halten eines Zustandes auf der Server-Seite (shared channel information) ist es möglich, ein sicheres 0-RTT Protokoll zu etablieren, das gegen Replay-Angriffe sicher ist.
   In üblichen Internet-Kommunikationsprotokollen wird ein Server-seitiger Zustand soweit möglich vermieden, weil
   a) dies durch eine unbegrenzte Anzahl von Clients für einen DoS-Angriff ausgenutzt werden könnte,
   b) im Fall von Load-Balancing sichergestellt werden müsste, dass der Client immer mit demselben Server spricht (was aber nicht geht, weil dazu am Load-Balancer die Verschlüsselung aufgebrochen werden müsste, was diesen wiederum zu einem Bottleneck machen würde)
   c) Internet-Protokolle darauf optimiert sind, effizient mit unterschiedlichsten Kommunikationspartnern zu kommunizieren. Im hier beschriebenen Anwendungsfall ist es dagegen kein Problem, wenn der Server einen Zustand halten muss, weil einerseits die möglichen Clients ohnehin durch die Autorisierung (Engineering!) eingeschränkt sind und andererseits Load-Balancer unüblich sind; selbst, wenn ein Load Balancer verwendet wird, ist die Channel-ID ohne Entschlüsselung des Transportstroms zugänglich; alle Daten, die zu einem Channel gehören, können so demselben Server zugeordnet werden.
3) Im Vergleich zu VPNs erlaubt das erfindungsgemäße Verfahren den zielgerichteten Zugriff auf einen bestimmten Anwendungs-Dienst (Service), ohne dass dazu eine Verbindung durch einen Tunnel auf Netzwerk-Ebene erforderlich ist. Dies reduziert durch eine Verringerung der Angriffsfläche die Möglichkeit für Malware, sich durch sog. lateral movement auszubreiten. Darüber hinaus ist es durch das Binden der Autorisierungs-Information an den Transport-Layer möglich, diese auf einfache Weise an die den Dienst implementierende Applikation weiterzugeben, so dass sie auch der Anwendung zur weiteren Auswertung zur Verfügung steht. Weiterhin ist es für zwischengeschaltete Firewalls möglich, die Metadaten des Transport- und Netzwerklayers auszuwerten und entsprechende Filterung durchzuführen. Dies wäre im Falle eines VPNs nicht möglich.
4) Im Vergleich zu einer reinen Netzwerk-Segmentierung bietet das erfindungsgemäße Verfahren durch einen kryptographischen Ende-zu-Ende-Schutz ein deutlich erhöhtes Sicherheitsniveau.

Daneben ist das Schutzkonzept nicht auf ein bestimmtes Netzwerk ("Intranet") beschränkt; vielmehr eignet es sich, Kommunikation über die Grenzen von Netzwerk-Segmenten hinaus abzusichern.

Vorliegende Erfindungsmeldung kann auch einen derartigen Tunnel nutzen, um anstelle der heute eingesetzten manuellen Konfiguration ein automatisches Einrichten des Tunnels und der zugehörigen Zugriffsregeln, über das hier im Folgenden beschriebene Verfahren, zu ermöglichen.

Die Erfindung beansprucht ein Verfahren zur Kommunikation in einem OT System, aufweisend eine erste Recheneinheit, eine zweite Recheneinheit und eine IAM Recheneinheit, mit den Schritten:
i) die erste Recheneinheit beantrag für einen vorgegeben Dienst der zweiten Recheneinheit bei der IAM Recheneinheit ein Token, wobei das Token eine Autorisierungs-Information für den Dienst aufweist,
ii) nach erfolgreicher Authentisierung und Überprüfung einer Autorisierung der ersten Recheneinheit für den Dienst erhält die erste Recheneinheit das Token,
iii) die erste Recheneinheit überträgt das Token an die zweite Recheneinheit,
iv) das Token wird von der zweiten Recheneinheit auf Autorisierung überprüft,
v) bei erfolgreicher Autorisierung wird ein logischer Kommunikationskanal zwischen der ersten und der zweiten Recheneinheit aufgebaut und der Dienst zur Verfügung gestellt, wobei
v.a) der Kommunikationskanal kryptografisch geschützt ausgebildet ist,
v.b) der kryptografische Schutz des Kommunikationskanals kryptografisch an den Inhalt des Tokens gebunden ist, und
v.c) der Lebenszyklus des Kommunikationskanals auch zeitlich länger sein darf als der Kommunikationsvorgang zwischen der ersten und der zweiten Recheneinheit,
   und
vi) die Kommunikation zwischen der ersten und der zweiten Recheneinheit wird ausschließlich über den logischen Kommunikationskanal durchgeführt.

Operational Technology Systeme (OT-System) umfassen Hard- und Software, die zur Steuerung, Regelung und Überwachung physischer Geräte wie Maschinen oder industrieller Anlagen und ihrer Prozesse eingesetzt wird.

Der Kommunikationskanal hat die Eigenschaft, dass er
a) Kryptografisch geschützt ist (Verschlüsselung und/oder Integritätsschutz)
b) Der Schutz des Kanals ist kryptografisch an den "Wortlaut" (also an den Inhalt) der Autorisierungsinformation (Token) gebunden [das ist tatsächlich anders (und auch besser) als bei bekannten Zero Trust-Lösungen]
c) Der Lebenszyklus des Kanals kann länger sein, als ein tatsächlicher Kommunikationsvorgang: Aufgrund von Engineering-Informationen weiß das System vorab, wer mit wem kommunizieren wird. Entsprechend können die Kanäle vorab aufgebaut werden (z.B. beim Hochfahren einer Komponente). Das ist
   (1) anders als bei heute üblichen Systemen und hat
   (2) den Vorteil, dass die Kommunikation ohne Zeitverzug starten kann, der ansonsten durch einen Schlüsselaustausch-Handshake etc. entsteht (TLS, DTLS etc. haben alle diese Eigenschaft. TLS v3 hat auch einen sog. 0-RTT Modus, bei dem sofort mit der gesicherten Kommunikation gestartet wird - aber dieser Modus hat ein paar Nachteile:
      (a) er funktioniert nur opportunistisch, d.h. man kann sich nicht darauf verlassen, und
      (b) für das erste übertragene Datenpaket gibt es keinen Replay-Schutz; das ist im OT-Umfeld möglicherweise katastrophal, wenn dieses Datenpaket z.B. ein Not-Aus Signal beinhaltet, das ein Angreifer bei einem früheren Notfall mitgelauscht hat. In der IT-Welt kann man damit leben, weil dort das erste Datenpaket bei den meisten Protokollen auf der Server-Seite keinen Zustand ändert, und insbesondere keine Auswirkung auf die physikalische Welt hat.

In einer Weiterbildung wird in dem Schritt v) zwischen der ersten und der zweiten Recheneinheit Schlüsselmaterial, das für die künftigen Kommunikation zwischen der ersten und der zweiten Recheneinheit ausgebildet ist, ausgetauscht.

In einer Weiterbildung kann eine Sicherung der Kommunikation zwischen der ersten und er zweiten Recheneinheit ausschließlich in der OSI Schicht 5 durchgeführt werden.

Dabei handelt es sich um eine integrierte Lösung, in der die Kanal-Absicherung und die Token-Verarbeitung in einem einheitlichen Vorgang erfolgt. Dies ist anders als im Stand der Technik, bei dem die Kommunikations-Absicherung auf Schicht 5 erfolgt (TLS), und die Tokens erst nachträglich im Applikations-Kontext (Schicht 6 und 7) ausgetauscht und verarbeitet werden. Dies hat auch Security-Vorteile für die erfindungsgemäße Lösung, da hier ein Angreifer, der über keinen gültigen Token verfügt, überhaupt nicht mit der Applikation kommunizieren kann - er sieht sie nicht einmal.

In einer alternativen Ausgestaltung kann eine Sicherung der Kommunikation zwischen der ersten und er zweiten Recheneinheit ausschließlich in der OSI Schicht 3 (wie bei bekannten VPN-Lösungen) durchgeführt werden.

In einer weiteren Ausführungsform kann das Token ein SAML-Dokument, ein JSON Web Token, ein CBOR Web Token oder ein Attribut-Zertifikat nach ITU-T X.509 aufweisen.

In einer weiteren Ausgestaltung kann das Token eine Gültigkeitsdauer oder eine Ablaufzeit aufweisen.

In einer weiteren Ausführungsform kann die Binding zwischen dem Kommunikationskanal und dem Token derart ausgebildet ist, dass nach dem Ablauf der Gültigkeitsdauer des Tokens der Kommunikationskanal weiterbenutzt wird, sofern die erste Recheneinheit der zweiten Recheneinheit ein weiteres Token präsentiert, das sich von dem Token ausschließlich in vordefinierten Attributen unterscheidet, insbesondere nur in der Gültigkeitsdauer.

In einer weiteren Ausprägung kann die IAM Recheneinheit ein weiteres Token ausstellen, das das Token referenziert, vorzugsweise dessen Hash-Wert als Attribut enthält, und dessen Gültigkeitsdauer verlängert.

In einer weiteren Ausführungsform kann die IAM Recheneinheit das Token für ungültig erklären, wobei die Information über das ungültige Token an die zweite Recheneinheit übermittelt wird.

Dies kann entweder durch ein Push-Verfahren (die IAM Recheneinheit verteilt Sperrlisten an die betroffene zweite Recheneinheit), oder durch ein Pull-Verfahren, bei dem die zweite Recheneinheit regelmäßig oder getriggert durch vorbestimmte Ereignisse (z.B. Verbindungsaufbau) die Gültigkeit des Tokens bei der IAM Recheneinheit oder einem Revokationslisten-Dienst erfragt.

Die Erfindung beansprucht auch ein OT System, aufweisend eine erste Recheneinheit, eine zweite Recheneinheit und eine IAM Recheneinheit, wobei
- die erste Recheneinheit ausgebildet ist, für einen vorgegeben Dienst der zweiten Recheneinheit bei der IAM Recheneinheit ein Token zu beantragen, wobei das Token eine Autorisierungs-Information für den Dienst aufweist,
- die IAM Recheneinheit ausgebildet ist, nach erfolgreicher Authentisierung und Überprüfung einer Autorisierung der ersten Recheneinheit für den Dienst, der ersten Recheneinheit das Token zu übermitteln,
- die erste Recheneinheit ausgebildet ist, das Token an die zweite Recheneinheit zu übertragen,
- die zweite Recheneinheit ausgebildet ist, das Token auf Autorisierung für den Dienst zu überprüfen,
- die erste und zweite Recheneinheit ausgebildet sind, bei erfolgreicher Autorisierung einen logischen Kommunikationskanal zwischen der ersten und der zweiten Recheneinheit aufzubauen und den Dienst zur Verfügung zu stellen, wobei v.a) der Kommunikationskanal kryptografisch geschützt ausgebildet ist,
   v.b) der kryptografische Schutz des Kommunikationskanals kryptografisch an den Inhalt des Tokens gebunden ist, und
   v.c) der Lebenszyklus des Kommunikationskanals auch zeitlich länger sein darf als der Kommunikationsvorgang zwischen der ersten und der zweiten Recheneinheit,
      und
- die erste und zweite Recheneinheit ausgebildet sind, die Kommunikation zwischen der ersten und der zweiten Recheneinheit ausschließlich über den logischen Kommunikationskanal durchzuführen.

In einer weiteren Ausgestaltung kann die die erste und die zweite Recheneinheit ausgebildet sein, zwischen der ersten und der zweiten Recheneinheit Schlüsselmaterial, das für die künftigen Kommunikation zwischen der ersten und der zweiten Recheneinheit ausgebildet ist, auszutauschen.

In einer weiteren Ausprägung kann eine Sicherung der Kommunikation zwischen der ersten und der zweiten Recheneinheit ausschließlich in der OSI Schicht 5 durchführbar sein.

In einer alternativen Ausprägung kann eine Sicherung der Kommunikation zwischen der ersten und der zweiten Recheneinheit ausschließlich in der OSI Schicht 3 durchführbar sein.

In einer weiteren Ausgestaltung kann die Binding zwischen dem Kommunikationskanal und dem Token derart ausgebildet sein, dass nach dem Ablauf der Gültigkeitsdauer des Tokens der Kommunikationskanal weiterbenutzt wird, sofern die erste Recheneinheit der zweiten Recheneinheit ein weiteres Token präsentiert, das sich von dem Token ausschließlich in vordefinierten Attributen unterscheidet, insbesondere nur in der Gültigkeitsdauer.

In einer weiteren Ausgestaltung kann die IAM Recheneinheit ausgebildet sein, ein weiteres Token auszustellen, das das Token referenziert, vorzugsweise dessen Hash-Wert als Attribut enthält, und dessen Gültigkeitsdauer zu verlängern.

In einer weiteren Ausgestaltung kann die IAM Recheneinheit ausgebildet sein, das Token für ungültig zu erklären, wobei die Information über das ungültige Token an die zweite Recheneinheit wird.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Blockschaltbild eines OT Systems und
- FIG. 2: das Ablaufdiagramm eines Kommunikationsaufbaus.

### DETAILLIERTE BESCHREIBUNG DER ERFINDUNG

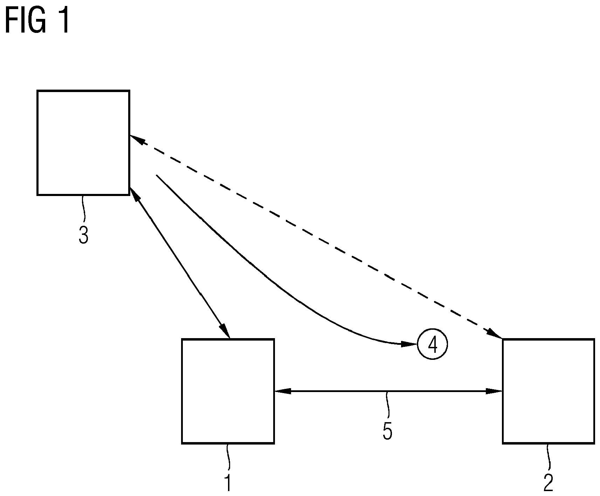

FIG. 1 zeigt ein vereinfachtes Blockschaltbild eines OT Systems, aufweisend eine erste Recheneinheit 1 (Client), eine zweite Recheneinheit 2 (Dienst oder Service) und eine IAM Recheneinheit 3 zur Erzeugung eines Tokens 4. Zwischen der ersten und der zweiten Recheneinheit 1 und 2 wird ein logischer Kommunikationskanal 5 entsprechend nachfolgenden Ausführungen aufgebaut.

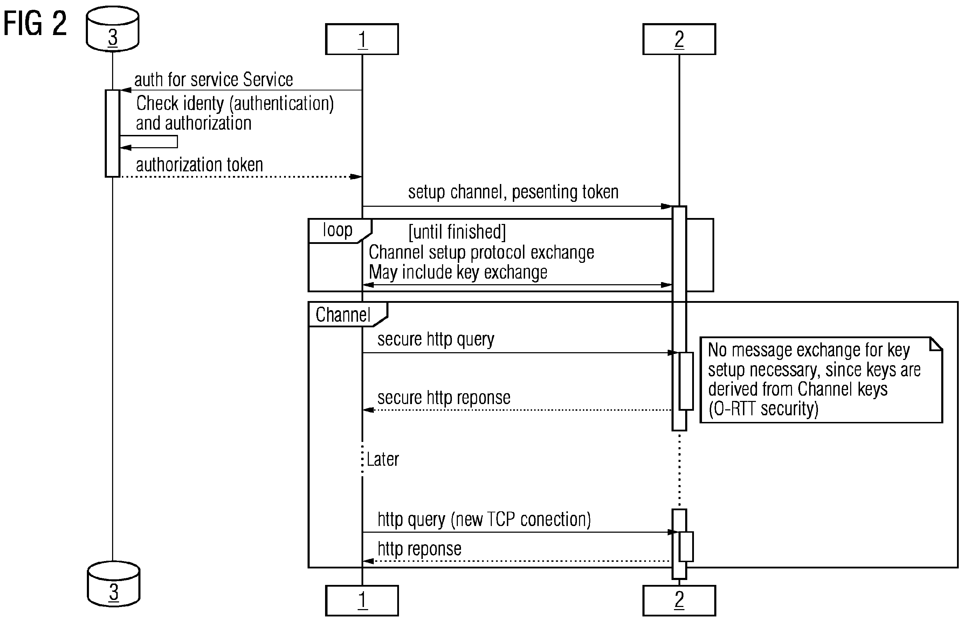

FIG. 2 zeigt das Ablaufdiagramm eines Kommunikationsaufbaus, wie es im Folgenden beschrieben wird.

### Aufbau eines Kommunikationskanals 3

Der Client (= erste Recheneinheit 1) beantragt von einer IAM Recheneinheit 3 eine als Token 4 bezeichnete Autorisierungs-Information für einen bestimmten Dienst (= zweite Recheneinheit), die er nach erfolgreicher Authentisierung und Überprüfung der Autorisierung erhält.

Vorteilhafterweise erhält der Client als Teil dieser Autorisierungsinformation auch Schlüsselmaterial, das es ihm erlaubt, sicher mit dem Dienst, zu dem er autorisiert wurde, zu kommunizieren. Dabei kann es sich um öffentliches Schlüsselmaterial (z.B. ein Diffie-Hellman Public Key) handeln, oder geheimes Schlüsselmaterial für symmetrische Kryptographie-Verfahren.

In einer alternativen vorteilhaften Ausgestaltung sind die Kommunikationspartner durch einen unabhängigen Prozess bereits in Besitz von Schlüsselmaterial, das sie für eine sichere Kommunikation benutzen können (z.B. pre-shared keys für symmetrische Verschlüsselung oder öffentliches Schlüsselmaterial, z.B. im Rahmen einer PKI).

Der Client kontaktiert den Dienst und überträgt das Token. Dieses wird vom Dienst überprüft:
a. Auf Authentizität ("Stammt das Token vom IAM-System?"), z.B. mithilfe von kryptographischen Signaturen oder Prüfsummen (MAC))
b. Auf Inhalt (Erlaubnis der Kommunikation); im Rahmen des Channel-Aufbaus beschränkt sich die Prüfung typischerweise auf grundlegende Fragen, wie z.B. "Darf der Client mit mir kommunizieren?"

Die erste Recheneinheit 1 erhält bei erfolgreicher Prüfung die Erlaubnis, mit dem Dienst einen Channel (= Kommunikationskanal 5) aufzubauen, d.h. geteilte Information auszutauschen oder zu erzeugen. Ein Teil der ausgetauschten oder durch einen Austausch erzeugten geteilten Information ist Schlüsselmaterial, das der künftigen Kommunikation zwischen erster Recheneinheit 1 und zweiter Recheneinheit 2 zugeordnet ist, und das vorteilhafterweise kryptographisch an das Token 4 gebunden ist (indem beispielsweise der Hashwert des Tokens 4 in eine Schlüsselableitung einfließt).

Der Channel-Aufbau kann durchgeführt werden, bevor die eigentliche Kommunikation zwischen Client und Dienst beginnt, z.B. beim Hochfahren des Clients.

Der Client und/oder der Dienst kann die entsprechende Funktionalität selbst durchführen oder - im Falle älterer Anwendungen bzw. Geräte ("legacy") - dies an einen Proxy auslagern. Dieser kann dann z.B. den Aufbau des Kanals durchführen. Im Kontext der Offenbarung übernehmen Access Proxies die Aufgabe des Clients oder eines Dienstes, stellvertretend für die Legacy-Geräte oder Dienste. Details sind Bestandteil einer separaten Erfindungsmeldung.

### Nutzung des Kommunikationskanals 5

Nach dem Aufbau kann der Kommunikationskanal 5 genutzt werden. Dazu wird zur Kommunikation über TCP eine Streambasierte authentisierte Transportverschlüsselung eingesetzt, ähnlich zu TLS-Records, allerdings ohne ein zusätzliches Key Agreement, das zusätzliche Kommunikations-Roundtrips erfordern würde; stattdessen wird das Schlüsselmaterial, das Teil der shared channel information ist, zur Absicherung der Kommunikation verwendet, vorteilhafterweise durch eine Schlüsselableitung vom ursprünglichen Schlüsselmaterial.

Für Datagram-basierte Kommunikation (UDP) wird ein ähnlicher Ansatz angewendet, jedoch auf Datagram-Basis.

Wichtig ist hierbei, dass mehrere TCP- und/oder UDP-Verbindungen zwischen Client und Dienst gleichzeitig und/oder hintereinander im Kontext desselben Kommunikationskanals 5 möglich sind, wobei vorteilhafterweise diese Verbindungen durch einen monotonen Verbindungszähler gegen Replay geschützt werden, und für jede Verbindung neues Schlüsselmaterial vom Basis-Schlüssel des Kanals abgeleitet wird. Für Datagram-basierte (also verbindungslose) Kommunikation soll eine Verbindung definiert sein durch einen Strom von Datagrammen, die dieselbe Kombination aus Quell-Adresse und -Port und Ziel-Adresse und -Port aufweisen, vorteilhafterweise versehen mit einem Timeout-Mechanismus.

In der alternativen Ausgestaltung, in der die Absicherung auf Layer 3 durchgeführt wird, besteht nach dem Aufbau des Kommunikationskanals 5 eine sichere Verbindung auf Layer 3 für alle IP Pakete oder vorteilhafterweise für bestimmte IP Pakete, die entsprechend den Regeln im Token 4 ausgewählt (gefiltert) werden.

Der Kommunikationskanal 5 ist also ein Kontext, in dem Kommunikationsverbindungen gültig und kryptographisch verständlich sind.

Die Autorisierungs-Information (= Token 4) steht der Service-Anwendung als Kontextinformation zur Verfügung, so dass sie von der Service-Anwendung genutzt werden kann, um feingranular Entscheidungen über den Zugriff auf bestimmte Ressourcen durchzusetzen. Zusätzlich zu den beiden Überprüfungen, die während des Kanalaufbaus durchgeführt werden (Nr. a. und b. oben) wird hier also eine dritte Überprüfung durchgeführt:
c. Auf Inhalt (Ressource): "Darf der Client auf die von ihm angefragte Ressource zugreifen?"

Dabei muss die Service-Anwendung z.B. den Client-User und seine Zugriffsrechte nicht notwendigerweise "kennen", in dem Sinn, dass die Service-Anwendung eine eigene Benutzerdatenbank vorhält. Es reicht, wenn sie die im Token 4 enthaltenen (und von der IAM Recheneinheit 3 entschiedenen) Policies versteht und durchsetzt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: erste Recheneinheit
- 2: Zweite Recheneinheit
- 3: IAM Recheneinheit
- 4: Token
- 5: Logischer Kommunikationskanal

## Patentansprüche

1. Verfahren zur Kommunikation in einem OT System, aufweisend eine erste Recheneinheit (1), eine zweite Recheneinheit (2) und eine IAM Recheneinheit (3), mit den Schritten:
i) die erste Recheneinheit (1) beantrag für einen vorgegeben Dienst der zweiten Recheneinheit (2) bei der IAM Recheneinheit (3) ein Token (4), wobei das Token (4) eine Autorisierungs-Information für den Dienst aufweist,
ii) nach erfolgreicher Authentisierung und Überprüfung einer Autorisierung der ersten Recheneinheit (1) für den Dienst erhält die erste Recheneinheit (1) das Token (4),
iii) die erste Recheneinheit (1) überträgt das Token (4) an die zweite Recheneinheit (4),
iv) das Token (4) wird von der zweiten Recheneinheit (2) auf Autorisierung überprüft,
v) bei erfolgreicher Autorisierung wird ein logischer Kommunikationskanal (5) zwischen der ersten und der zweiten Recheneinheit (1, 2) aufgebaut und der Dienst zur Verfügung gestellt, wobei
v.a) der Kommunikationskanal (5) kryptografisch geschützt ausgebildet ist,
v.b) der kryptografische Schutz des Kommunikationskanals (5) kryptografisch an den Inhalt des Tokens (4) gebunden ist, und
v.c) der Lebenszyklus des Kommunikationskanals (5) auch zeitlich länger sein darf als der Kommunikationsvorgang zwischen der ersten und der zweiten Recheneinheit (1, 2),
und
vi) die Kommunikation zwischen der ersten und der zweiten Recheneinheit (1, 2) wird ausschließlich über den logischen Kommunikationskanal (5) durchgeführt.

2. Verfahren nach Anspruch 1, **dadurch gekennzeichnet,**
**dass** in dem Schritt v) zwischen der ersten und der zweiten Recheneinheit (1, 2) Schlüsselmaterial, das für die künftigen Kommunikation zwischen der ersten und der zweiten Recheneinheit (1, 2) ausgebildet ist, ausgetauscht wird.

3. Verfahren nach Anspruch 1 oder 2, **dadurch gekennzeichnet, dass** eine Sicherung der Kommunikation zwischen der ersten und er zweiten Recheneinheit (1, 2) ausschließlich in der OSI Schicht 5 durchgeführt wird.

4. Verfahren nach einem der vorhergehenden Ansprüche, **dadurch gekennzeichnet,**
**dass** das Token (4) ein SAML-Dokument, ein JSON Web Token, ein CBOR Web Token oder ein Attribut-Zertifikat nach ITU-T X.509 aufweist.

5. Verfahren nach einem der vorhergehenden Ansprüche, **dadurch gekennzeichnet,**
**dass** das Token (4) eine Gültigkeitsdauer oder eine Ablaufzeit aufweist.

6. Verfahren nach Anspruch 5, **dadurch gekennzeichnet,**
**dass** die Binding zwischen dem Kommunikationskanal (5) und dem Token (4) derart ausgebildet ist, dass nach dem Ablauf der Gültigkeitsdauer des Tokens (4) der Kommunikationskanal (5) weiterbenutzt wird, sofern die erste Recheneinheit (1) der zweiten Recheneinheit (2) ein weiteres Token präsentiert, das sich von dem Token (4) ausschließlich in vordefinierten Attributen unterscheidet, insbesondere nur in der Gültigkeitsdauer.

7. Verfahren nach einem der Ansprüche 1 bis 4, **dadurch gekennzeichnet,**
**dass** die IAM Recheneinheit (3) ein weiteres Token ausstellen, das das Token (4) referenziert, vorzugsweise dessen Hash-Wert als Attribut enthält, und dessen Gültigkeitsdauer verlängert.

8. Verfahren nach einem der vorhergehenden Ansprüche, **dadurch gekennzeichnet,**
**dass** die IAM Recheneinheit (3) das Token (4) für ungültig erklärt, wobei die Information über das ungültige Token (4) an die zweite Recheneinheit (2) übermittelt wird.

9. OT System, aufweisend eine erste Recheneinheit (1), eine zweite Recheneinheit (2) und eine IAM Recheneinheit (3), wobei
- die erste Recheneinheit (1) ausgebildet ist, für einen vorgegeben Dienst der zweiten Recheneinheit (2) bei der IAM Recheneinheit (3) ein Token (4) zu beantragen, wobei das Token (4) eine Autorisierungs-Information für den Dienst aufweist,
- die IAM Recheneinheit (3) ausgebildet ist, nach erfolgreicher Authentisierung und Überprüfung einer Autorisierung der ersten Recheneinheit (1) für den Dienst, der ersten Recheneinheit (1) das Token (4) zu übermitteln,
- die erste Recheneinheit (1) ausgebildet ist, das Token (4) an die zweite Recheneinheit (2) zu übertragen,
- die zweite Recheneinheit (2) ausgebildet ist, das Token (4) auf Autorisierung für den Dienst zu überprüfen,
- die erste und zweite Recheneinheit (1, 2) ausgebildet sind, bei erfolgreicher Autorisierung einen logischen Kommunikationskanal (5) zwischen der ersten und der zweiten Recheneinheit (1, 2) aufzubauen und den Dienst zur Verfügung zu stellen, wobei
v.a) der Kommunikationskanal kryptografisch geschützt ausgebildet ist,
v.b) der kryptografische Schutz des Kommunikationskanals kryptografisch an den Inhalt des Tokens gebunden ist, und
v.c) der Lebenszyklus des Kommunikationskanals auch zeitlich länger sein darf als der Kommunikationsvorgang zwischen der ersten und der zweiten Recheneinheit,
und
- die erste und zweite Recheneinheit (1, 2) ausgebildet sind, die Kommunikation zwischen der ersten und der zweiten Recheneinheit (1, 2) ausschließlich über den logischen Kommunikationskanal (5) durchzuführen.

10. OT System nach Anspruch 9, **dadurch gekennzeichnet,**
**dass** die die erste und die zweite Recheneinheit (1, 2) ausgebildet sind, zwischen der ersten und der zweiten Recheneinheit (1, 2) Schlüsselmaterial, das für die künftigen Kommunikation zwischen der ersten und der zweiten Recheneinheit (1, 2) ausgebildet ist, auszutauschen.

11. OT System nach Anspruch 9 oder 10, **dadurch gekennzeichnet,**
**dass** eine Sicherung der Kommunikation zwischen der ersten und er zweiten Recheneinheit (1, 2) ausschließlich in der OSI Schicht 5 durchführbar ist.

12. OT System nach einem der Ansprüche 9 bis 11, **dadurch gekennzeichnet,**
**dass** das Token (4) eine Gültigkeitsdauer oder eine Ablaufzeit aufweist.

13. OT System nach Anspruch 12, **dadurch gekennzeichnet,**
**dass** die Binding zwischen dem Kommunikationskanal (5) und dem Token (4) derart ausgebildet ist, dass nach dem Ablauf der Gültigkeitsdauer des Tokens (4) der Kommunikationskanal (5) weiterbenutzt wird, sofern die erste Recheneinheit (1) der zweiten Recheneinheit (2) ein weiteres Token präsentiert, das sich von dem Token (4) ausschließlich in vordefinierten Attributen unterscheidet, insbesondere nur in der Gültigkeitsdauer.

14. OT System nach einem der Ansprüche 9 bis 11, **dadurch gekennzeichnet,**
**dass** die IAM Recheneinheit (3) ausgebildet ist, ein weiteres Token auszustellen, das das Token (4) referenziert, vorzugsweise dessen Hash-Wert als Attribut enthält, und dessen Gültigkeitsdauer zu verlängern.

15. OT System nach einem der Ansprüche 9 bis 14, **dadurch gekennzeichnet,**
**dass** IAM Recheneinheit (3) ausgebildet ist, das Token (4) für ungültig zu erklären, wobei die Information über das ungültige Token (4) an die zweite Recheneinheit (2) übertragen wird.
